(19) 

Europäisches
Patentamt
European
Patent Office
Office européen
des brevets

(11) **EP 2 020 428 A1**

(12) **EUROPEAN PATENT APPLICATION**

(43) Date of publication:
**04.02.2009 Bulletin 2009/06**

(51) Int Cl.:
***C08K 9/08*** (2006.01)

(21) Application number: **07113637.8**

(22) Date of filing: **01.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Borealis Technology Oy**
**06101 Porvoo (FI)**

(72) Inventors:
• **Machl, Doris**
**4020, Linz (AT)**

• **Gahleitner, Markus**
**4501, Neuhofen/Krems (AT)**
• **Zirbs, Ronald**
**06114, Halle/Saale (DE)**
• **Binder, Wolfgang**
**06114, Halle/Saale (DE)**

(74) Representative: **Brunnbauer, Gerhard**
**Borealis Polyolefine GmbH**
**St.-Peter-Strasse 25**
**4021 Linz (AT)**

(54) **Impact modification of polyolefins**

(57)    A process for improving the impact resistance of polyolefins without compromising stiffness and processability by adding core-shell nanoparticles comprising a mineral core and a polymeric shell which is coupled chemically to the core.

**Fig. 4**

**Description**

The present invention relates to a process for improving the impact resistance of polyolefins through the addition of special nanoparticles comprising a mineral core and a polymeric shell in which the shell is coupled chemically to the core. The present invention further relates to impact modified polymer compositions resulting from this process.

<u>Prior Art</u>

Impact modification of polyolefins, e.g. polypropylene, is a highly relevant area of polymer development due to the otherwise limited impact strength of these materials, especially when sub-zero temperatures are concerned. While elastomer modification is a widely used approach, it necessarily leads to an unwanted stiffness and strength reduction of the polymer. In contrast to that, hard-phase impact modification can improve the mechanical performance in both directions, but has been found to work for polypropylene only in some special cases (e.g. when combining selective β-nucleation with fine calcium carbonate, see Kotek et al. Eur. Polym. J. 40 (2004) 679-684 as well as EP 1746128).

Modifying polypropylene with a non-crosslinked elastomer furthermore results in a close correlation between viscosity ratio and morphology, essentially prohibiting the generation of very fine and efficient structures. The morphology is a key factor which determines the efficiency of the impact modification. It occurs when the rubber particle size (d) is smaller than a critical value ($d_c$) of d or rubber volume fraction ($\Phi$) is larger than the critical value ($\Phi_c$) of $\Phi$ at brittle ductile transition. Now, $d_c$ increases with $\Phi$; on the other hand, $\Phi c$ increases with decreasing d. So the brittle ductile transition depends not only on $\Phi$ but also on d, making very small (nano-scale) particles preferable.

Due to the molecular weight dependence of both cohesive strength and glass transition temperature of essentially all impact modifiers (see C. Grein et al.J.Appl.Polym.Sci., 87 (2003) 1702-12 for the case of reactor-made EPR) only sub-optimal solutions can be found. Crosslinking the elastomer phase may offer a partial solution (see e.g. S.-M. Lai et al. Europ. Polym. J. 41 (2005) 3031-3041), but almost always results in a massive viscosity increase and the danger of flow instabilities.

Earlier attempts of generating core-shell particles having a mineral core and a polymeric shell can be divided into three categories:

1) Dynamical formation of a thermoplastic-elastomeric shell by using mineral fillers in combination with a polar modified elastomer in a non-polar thermoplastic matrix: This was tested for example by Kolarik *et al.* in PP/EPDM/ filler systems using polar modification of one of the components with maleic anhydride or acrylic acid. Their work shows that they could partially control phase positioning of calcium carbonate and thereby affect the mechanical properties (see Kolarik et al. Polymer Communications 31 (1990) 201-4 as well as Kolarik et al. Polymer 33 (1992) 4961-7). The selectivity was limited and the cohesion between core and shell minimal. A similar concept is also described for organically modified clay particles in syndiotactic PP through the addition of maleic anhydride grafted isotactic polypropylene by Kaempfer et al. in Polymer 43 (2002) 2909-16; selectivity was very limited here as well.
2) Covering mineral particles with a crosslinkable shell and crosslinking the same afterwards: This route is exemplified by US 5028482, which describes a process for preparing a latex coated inorganic filler. In this case the target was to essentially modify the color of said filler with a thin pigmented cover not contributing to the mechanical effect of the filler.
3) Grafting polymeric chains to the surface of inorganic particles, with or without prior organic modification of said particles: The polymerization of different monomers like methyl-methacrylate or styrene from a silane-modified silica surface is described by US 6720007 with the target of generating hollow polymeric microspheres which are produced after finishing the shell polymerization by dissolving the core with hydrofluoric acid. The particles in this patent are in an overall diameter range of 2 to 20 μm and thus not suitable for improving the mechanical properties of polyolefins. An alternative approach is radiation grafting of radically polymerizable monomers to the surface of inorganic particles as described by Rong et al. in Polymer 42 (2001) 167-83. A mixture of grafted chains and non-grafted polystyrene chains is formed in this process, resulting in a very limited cohesion of the polymeric shell.

The term "mineral core" in the context of the present invention means a particle, which comprises at least 70 %, preferably at least 80 %, more preferably at least 90% and most preferably essentially consists of one or more inorganic compounds.

<u>Object of the present invention</u>

The target for this invention is a process for improving the impact resistance of polyolefins, preferably at temperatures below the freezing point, without compromising stiffness and processability.
A further object of the present invention are polymer compositions, having improved impact resistance, preferably at temperatures below the freezing point, without compromising stiffness and processability.

A measure for impact resistance is herein obtained through DMTA (Dynamic Mechanical Thermal Analysis). Glass transition temperatures are measured with this technique. They are a measure for impact strength insofar as glass transition temperatures which are attributable to polymeric subcomponents of the polymer compositions correlate inversely with impact resistance, i.e. a lower glass transition temperature is indicative for a higher impact resistance. A further measure for impact resistance is the peak area, which is associated with a glass transition temperature, i.e. a larger peak area is indicative for a higher impact resistance.

Brief description of the present invention

A pathway to the impact modification of polyolefins was found in the addition of nano-scale soft particles with good internal cohesion and a low glass transition temperature. These were generated in the form of core/shell nanoparticles and found to be suitable for incorporation into polyolefins for improving the impact strength, especially at temperatures below the freezing point. In detail this was achieved by combining (i) a nano-scale mineral core having a weight average diameter of 1 to 100 nm and (ii) a polymeric shell which is coupled chemically to the core to form said core/shell nanoparticles.

Especially suitable inorganic substances for the mineral core (i) are oxides, silicates or carbonates of metals or semi-metals of the groups 2-13 of the periodic table. Preferred substances for the mineral core (i) are silicon dioxide, titanium dioxide, zirconium dioxide, zinc oxide or aluminium oxide.

A preferred range for the weight average diameter of the mineral core (i) is 5 to 50 nm.

Especially suitable polymers for the shell (ii) are non-polar polymers having a molecular weight of 1 to 1000 kg/mol. Preferred polymers for the shell (ii) are polyisobutylene, polybutadiene and polystyrene. Especially preferred polymers for the shell (ii) are polyisobutylene homo- or copolymers.

The such generated core/shell nanoparticles (B) are added to a polyolefin (A) in a concentration of 0,1 to 15 wt%, preferably 0,5 to 10 wt%, resulting in an impact modified polymer composition.

Especially suitable polyolefins (A) are crystalline polyolefins.

Particularly suitable polyolefins (A) are polyethylene and/or polypropylene. A preferred class of polyolefins (A) are polypropylene homo- or copolymers having an MFR at 230°C and 2,16 kg load of 0,1 to 100 g/10min. Another preferred class of polyolefins (A) are polyethylene homo- or copolymers having a density from 890 to 950 kg/m$^3$ and an MFR at 190°C and 2,16 kg load of 0,05 to 50 g/10min.

The impact modified polymer compositions comprising the polyolefin (A) and the nanoparticles (B) are preferably prepared in a melt mixing process at a temperature from 150 to 350°C, preferably 170 to 300°C. Said melt mixing process is preferably performed in a twin screw extruder or single screw co-kneader.

Detailed description of the present invention

The present invention provides a polymer composition, comprising

(A) a polyolefin and
(B) 0,1 to 15 wt% nanoparticles consisting of

(i) a mineral core having a weight average diameter of 1 to 100 nm and
(ii) a polymeric shell which is coupled chemically to the core.

Preferably the polyolefin is a crystalline polyolefin.

The term "crystalline" refers to a crystallinity of more than 30%, preferably more than 40% of the polyolefin component as determined for example by differential scanning calorimetry, using the maximum melt enthalpy of the respective polyolefin as crystallinity measure (i.e. 100%).

Melting enthalpy for 100% crystalline homo polypropylene is 209 J/g (Brandrup, J., Immergut, E. H., Eds. Polymer Handbook, 3rd ed.; Wiley: New York, 1989; Chapter 3.)

Melting enthalpy for 100% crystalline HDPE is 293 J/g (B. Wunderlich, Macromolecular Physics, Vol. 1, Crystal Structure, Morphology, Defects, Academic Press, New York (1973).

The composition may further optionally comprise additives and modifiers commonly used for the stabilization and property enhancement of polyolefins. The central components of the polymer composition as well as the process for preparing said composition in accordance with the present invention are further described below.

Preparation of the polyolefin

As the polyolefin resin (A) any olefin homo- or copolymers may be used. However, preferably compositions such as propylene homopolymers, propylene/ethylene random copolymers or heterophasic propylene/ethylene copolymers may be used. Preferably the olefin homo- or copolymer is an ethylene or propylene homo- or copolymer.

In case that (A) are polypropylene homo- or copolymers it is preferred that these have an MFR at 230°C and 2,16 kg load of 0,1 to 100 g/10min. In case that (A) are polyethylene homo- or copolymers it is preferred that these have a density from 890 to 950 kg/m$^3$ and an MFR at 190°C and 2,16 kg load of 0,05 to 50 g/10min. Preferably the propylene homo- or copolymers are isotactic and having an isotactic pentad concentration mmmm of >85 %, determined by $^{13}$C-NMR.

Suitable production processes for the mentioned polyolefins are generally known to those skilled in the art. For the production of polypropylene homo- or copolymers single- or multi-stage polymerization processes based on a heterogeneous Ti/Mg type catalyst (Ziegler/Natta type) or a metallocene (single-site) type catalyst can for example be employed. The catalyst system will normally be complemented by a co-catalyst component and at least one electron donor (internal and/or external electron donor, preferably at least one external donor) controlling the stereoregularity of the produced polymer. Suitable catalysts are in particular disclosed in US 5,234,879, WO 92/19653, WO 92/19658 and WO 99/33843, incorporated herein by reference. Typically the co-catalyst is an alkyl-aluminium based compound. Preferred external donors are the known silane-based donors, such as dicyclopentyl dimethoxy silane or cyclohexyl methyldimethoxy silane.

Heterophasic polypropylene compositions are a further example of suitable polyolefins (A) for the present invention. Heterophasic polypropylene compositions can be produced either by melt mixing of a propylene homo- or copolymer with an impact modifier like an ethylene-propylene rubber or an ethylene/α-olefin copolymer having a density of less than 920 kg/m$^3$, or as reactor blends prepared by sequential polymerization. The heterophasic polypropylene compositions are also called high-impact polypropylene compositions or - especially when they are produced by sequential polymerisation - heterophasic copolymers. The high-impact polypropylene compositions may be described as propylene copolymers comprising a matrix phase comprising a propylene homopolymer and/or a propylene random copolymer and a disperse phase comprising an ethylene rubber copolymer. The preferred comonomer (if any) for the matrix phase is ethylene or 1-butene, in particular ethylene, while the preferred comonomer for the dispersed phase is propylene. Accordingly the disperse phase can be described as an ethylene-propylene-rubber (EPR). Typically, the matrix phase amounts to 50 to 98 wt% of the heterophasic composition and the dispersed phase amounts to 2 to 50 wt% of the heterophasic composition. Representative examples of such heterophasic compositions to be employed in accordance with the present invention are disclosed in the European Patent Applications of Borealis TOY such as EP 1354901 A1, EP 1344793 A1 and EP 1702956 A2, incorporated herein by reference.

The mentioned ethylene homo- or copolymers produced by a single- or multistage process by polymerisation of ethylene using alpha-olefins like 1-butene, 1-hexene or 1-octene as comonomers for density regulation. Preferably, a multi-stage process is applied in which both the molecular weight and the comonomer content can be regulated independently in the different polymerisation stages. The different stages can be carried out in liquid phase using suitable diluents and/or in gas phase at temperatures of 40 - 110 °C and pressures of 10 to 100 bar. A suitable catalyst for such polymerisations is either a Ziegler-type titanium catalyst or a single-site catalyst in heterogeneous form. Generally, the polyethylene production processes are within the state of the art. The various possibilities for the production of suitable ethylene homo- and copolymers and suitable catalysts therefor are described in detail in Encyclopedia of Polymer Science and Technology (© 2002 by John Wiley & Sons, Inc.), pages 382 - 482, the disclosure of which is incorporated herein by reference.

Further representative examples of polyethylene production processes are for example described in EP 1655339 A1.

Preparation of the inorganic/organic core-shell nanoparticles

The inorganic/organic core-shell nanoparticles (B) may be prepared by one of the two following ways:

1) By synthesizing polymer chains of desired length and reactively coupling these to the surface of the mineral core particles (hereinafter called "grafting-to approach")
2) By modifying the surface of the mineral core particles in an appropriate way to allow starting a polymerization reaction from said surface and then synthesizing the polymer chains of desired length (hereinafter called "grafting-from approach")

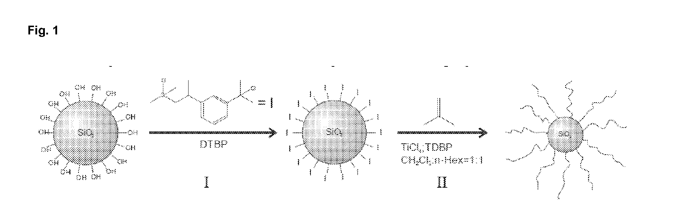

Figure 1 shows in a schematic view the general synthesis procedure of core-shell nanoparticles according to the "grafting-from approach"

In any case it is desirable to prepare the core-shell nanoparticles in such a way that the elastic modulus of the polymeric shell (ii) is significantly lower than both the elastic moduli of the mineral core (i) and of the polyolefin (A). It is also desirable that the polymeric shell consists of chains having a largely identical length, i.e. a low polydispersity. Consequently, preferred polymerization processes for synthesizing the polymer chains in either the "grafting-to" or the "grafting-from" approach are processes resulting in such low polydispersities like ionic polymerization, living or quasi-living polymerization.

Suitable substances for both the mineral core (i) and the polymeric shell (ii) have been listed above. For the case of silicon dioxide as core material and polyisobutylene as shell material the following general process as also outlined by Chen *et al.*, Polymer Preprints, 44 (2003) 463 ff., and represented schematically by figure 1 can be applied: In a first step (I) the surface of a commercially available silica nanopowder is modified with a suitable initiator substance, using the naturally available hydroxyl groups at the surface as anchoring points for this initiator. Prior to the initiator addition drying of the silica nanoparticles is required, which is preferably carried out at temperatures above 100°C and in vacuum at a pressure below 0,2 mbar. Two examples for suitable initiators are chloro(2-(3-(2-chloropropane-2-yl)phenyl)propyl)dimethylsilane, commonly abbreviated as CECE, and chloro(5-chloro-2,5-dimethylhexyl)dimethylsilane, commonly abbreviated as CHCS. The surface modification can be carried out at ambient temperature in water-free dichloromethane with di-tertbutyl-pyridine (DTBP) as catalyst. Centrifugation or filtration can be used to separate the modified particles from the residual initiator, and the success of the surface modification can be assessed by $^{13}$C-NMR CP-MAS spectroscopy as described for example by Mijatovic et al., Mikrochim. Acta 2000, 133, 175 - 181, and/or by thermogravimetry (TGA) according to ISO 11358.

The polymerization with isobutylene (step II) can then be done using different solvent-mixtures including dichloromethane / n-hexane, chloromethane / n-hexane, chloromethane / methylcyclohexane, dichloromethane / methylcyclohexane and other similar combinations, catalyzed by the use of titaniumtetrachloride and di-tert-butylpyridine (DTBP). The usage of DTBP as proton-trap and titaniumtetrachloride as catalyst provides good conditions for the quasi-living cationic polymerization. Addition of minor amounts of a nucleophilic reagent like DMA or DMF renders the polymerization-system more stable leading to a reduced polydisperity of the final polymeric product. This step is concluded by quenching the polymerized poly(isobutylene) (PIB) chains with methanol. The resulting core-shell nanoparticles can be finally characterized by TGA, dynamic light scattering (DLS, according to ISO/DIS 22412) and transmission electron microscopy (TEM), while the molecular weight of the PIB chains can be determined by dissolution of the silica core in hydrofluoric acid (HF) using size exclusion chromatography (SEC) in THF according to ISO 11344. A clear correlation between molecular weight of the PIB chains and polymer shell thickness respectively overall diameter of the core-shell nanoparticles can be established.

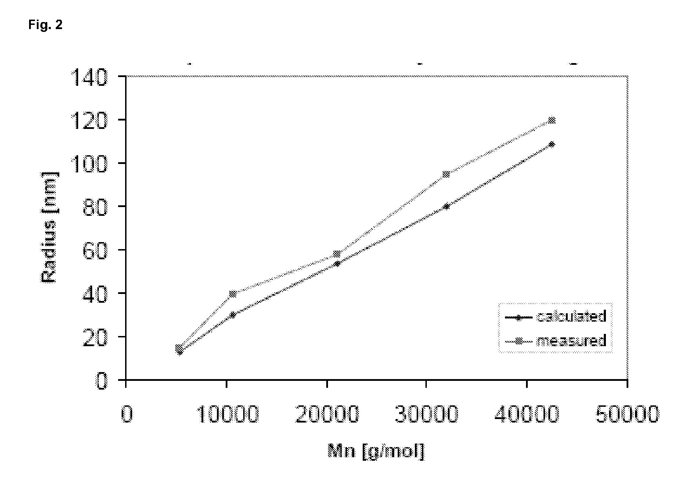

Figure 2 shows a correlation between number average molecular weight of grafted PIB chains (from SEC) and radius of the core/shell nanoparticles (calculated and measured by DLS)

Preparation of the impact modified polymer compositions

The inventive impact modified polymer compositions are prepared by dispersing the core-shell nanoparticles (B) in the polyolefin resin (A). Preferably, a melt mixing process at a temperature from 170 to 300°C is used for this dispersion step. Said melt mixing process is preferably performed in a twin screw extruder or single screw co-kneader.

The core-shell nanoparticles (B) may for example be added to the polyolefin resin (A) in one of the three following ways:

> 1) By spraying a suspension of the core-shell nanoparticles onto polyolefin powder or pellets, followed by the aforementioned melt mixing process
> 2) By freeze drying a solution of the core-shell nanoparticles to generate a powder, which is then pre-mixed with polyolefin powder or pellets, followed by the aforementioned melt mixing process
> 3) By freeze drying a solution of the core-shell nanoparticles to generate a powder, which is then fed to the extruder or mixer downstream of the main feed for polyolefin powder or pellets in the aforementioned melt mixing process

The melt mixing process may also be used to optionally disperse other additives and modifiers commonly used for the stabilization and property enhancement of polyolefins at the same time.

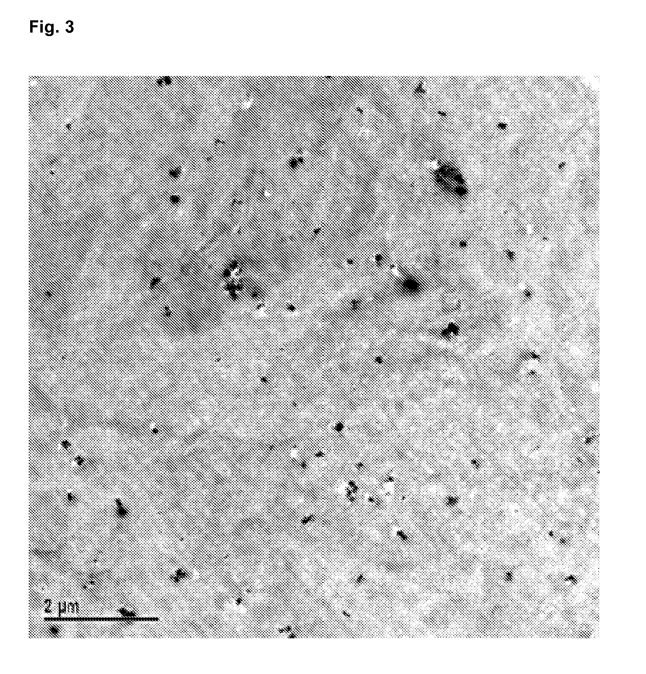

The dispersion quality can be assessed directly from transmission electron micrographs of the impact modified polymer compositions, as figure 3 shows for one of the inventive examples. In this image, the core-shell nanoparticles are easily recognizable due to the low density of the PIB shell readily accepting the contrasting agent.

Figure 3 shows a transmission electron micrograph of example 3 (ultramicrotomed specimen after contrasting with ruthenium tetroxide as described e.g. by Pölt et al. J.Appl.Polym.Sci. 78 (2000) 1152-61)

Optional additives and modifiers

Optionally added suitable additives and modifiers include processing, long-term heat stabilisers and UV stabilizers, nucleating agents, mineral fillers etc. not exceeding an overall content of 5 wt%.

Applications

The impact modified polymer compositions comprising the polyolefin (A) and the nanoparticles (B) according to this invention may be used preferably for the preparation of extruded, injection molded and blow molded articles, in particular pipes and fittings as well as automotive and other technical components.

Examples

The present invention will now be further described with reference to the following non-limiting examples and comparative examples.

The following test methods were employed to characterize the base polymers, the core-shell nanoparticles and the impact modified polymer compositions:

- Melt flow rate (MFR): Determined according to ISO 1133 at 230°C with a load of 2,16 kg for polypropylene and at 190 °C with a load of 2,15 kg for polyethylene.
- Density: Determined according to ISO 1183 on compression molded specimens.
- Xylene solubles (XS) content: For the determination of the XS fraction, 2.0 g of polymer is dissolved in 250 ml of p-xylene at 135°C under stirring. After $30 \pm 2$ min the solution is allowed to cool for 5 min at ambient temperature and then allowed to settle for 30 min at $23 \pm 0.5°C$. The solution is filtered with a paper filter into two 100 ml flasks. The solution in the first 100 ml flask is evaporated in nitrogen flow and the residue is dried under vacuum at 90°C until constant weight is reached. The xylene soluble (XS) fraction is then calculated using the following equation:

$$XS\ [\%] = (100\ m_1\ v_0)\ /\ (m_0\ v_1)$$

wherein $m_0$ is the initial polymer amount [g], $m_1$ is the weight of the residue [g], $v_0$ is the initial volume [ml] and $v_1$ the volume of the analysed sample [ml].

- Dynamic light scattering (DLS): The particle size distribution was determined in accordance with ISO/DIS 22412. A Viscotek® DLS 802 instrument was used for all measurements using a BSA-solution (bovine serum albumine, 2mg/ml) as standard.
- Thermogravimetric analysis (TGA): Measurements were performed according to ISO 11358; approximately 4 mg substance was weighted into an open platinum capsule. The measurement was conducted with a heating rate of 4K/min in the range from 295K to 1273 K under a constant synthetic airflow of 40 ml/min.
- Gel permeation chromatography (GPC): The molecular weight distribution (MWD) as well as the weight average of said distribution, $M_w$, was determined for both the pure polyisobutylene (PIB) as well as the surface grafted PIB chains released by dissolving the core by GPC in accordance to ISO 11344. All measurements were conducted by the use of the Viscotek® GPC-max VE2001 , VE3580 RI-detector (at 35°C) with THF as mobile phase, a column temperature of 22°C and a sample concentration of approx. 1mg/ml. Calibration was done both with polystyrol-(Viscotek®, from Viscotek GmbH, Germany) and polyisobutylene (Viscotek®)-standards.
- Differential scanning calorimetry (DSC): Melting temperature ($T_m$), melting enthalpy ($H_m$), crystallization temperature ($T_c$) and crystallization enthalpy ($H_c$) were determined by differential scanning calorimetry (DSC) on films according to ISO 3146. $T_c$ and $H_c$ are determined in the cooling scan, $T_m$ and $H_m$ in the second heating scan of a sequence heating/cooling/heating of +10 / -10 / +10 K/min between +20°C and +220°C.
- Melt rheology: A standard rheological characterization in melt state at 230°C was carried out in dynamic-mechanical mode and plate-plate geometry according to ISO 6721-10-1999, starting from compression moulded plaques and using a frequency sweep from 400 to 0,001 rad/s. According to the well-known Cox/Merz-relation (Cox and Merz, J.Polym.Sci. 28, 619, 1958) the complex viscosity η* resulting from storage and loss modulus by

$$\eta* = \frac{\left(G'^2 + G''^2\right)^{1/2}}{\gamma'}$$

can be assumed to be identical to the shear viscosity $\eta(\gamma)$ for $\omega = \gamma$; $\omega$ here being the frequency and $\gamma$ the shear rate. The zero shear viscosity $\eta_0$ is the low frequency limit of the shear viscosity curve $\eta(\gamma)$ determined in a range where the slope is zero.

- Dynamic-mechanical solid state testing (DMTA): The glass transition points as well as the storage modulus at +23°C were measured using dynamic-mechanical analysis according to ISO 6721-7 on compression molded specimens of 1 mm thickness in the temperature range from -110 to +160°C at a heating rate of 2 °C/min.
- Tensile test: All parameters were determined according to ISO 527, determined on dog-bone shape compression molded specimens of 1 mm thickness as described in EN ISO 1873-2.

Preparation of core-shell nanoparticles (examples a to d)

Two different types of silica nanoparticles were used as core materials for the preparation:

- Aerosil OX50, a fumed silica type without surface modification, commercially available from Degussa AG, Germany (see example a and comparative example e for characteristics)
- Sigma-Aldrich Silica nanopowder # 637238 (Silicon dioxide, nanopowder, average diameter 15 nm, purity 99,5%), a special silica type without surface modification, commercially available from Sigma-Aldrich (see examples b and c as well as comparative examples f and g for characteristics)
- Aerosil AE200, a fumed silica type without surface modification, commercially available from Degussa AG, Germany (see example d for characteristics)

All core-shell nanoparticles were prepared by an optimized modification and polymerization method as follows: The modification of the silica nanoparticles was performed in 20ml dichloromethane for 1g SA15 by adding 410$\mu$l CECE and 410$\mu$l DTBP and stirring at 10°C for 5 hours, followed by two fast centrifugation and washing steps at 5-10°C under argon atmosphere (the overall workup time was kept at 15 minutes max.). Immediate re-dispersion in 120 ml of cold dichloromethane (which had been purged by bubbling argon through the solvent) and cooling down to -80°C avoided a destruction of the initiator. After adding 80ml cleaned and freshly distilled n-hexane, 90 $\mu$l DTBP 150 mg of soluble monoinitiator 2-chloro-2,2,4-trimethyl-pentane, 6 ml TiCl$_4$ and 190$\mu$l DMA the mixture was stirred for 10 minutes. The polymerization was started by adding 5 g liquid isobutylene (IB) to the mixture. After 10 minutes the second portion of 5g IB was added and furthermore the reaction-solution was stirred for an appropriate time at -80°C to reach the desired molecular weight (a time of 40 min was found to correspond to a molecular weight of 13,5 kg/mol). Afterwards, the polymerization was quenched by adding 50 ml freshly dried and distilled, prechilled methanol. Stirring this mixture again for about 20 minutes at -80°C provided a complete reaction of the living polymer chain ends. The solvent was evaporated in vacuum, the resulting core-shell nanoparticles were dissolved in hexane and subsequently precipitated into an ice cold 1/1-mixture of (acetone/methanol), collected and the residue was dried in high-vacuum for about 24 hours to remove all traces of solvents and residual titanium-compounds. The main characteristics of the final particles can be found in table 1.

Preparation of comparative nanoparticles and modifiers

(comparative examples e, f and g)

Non-modified silica nanoparticles as received from the suppliers were used here in combination with a narrow molecular weight distribution poly(isobutylene) prepared by living cationic polymerization in an analogous way to the aforementioned description. Instead of the surface-bound initiator the equal amount of soluble initiator (2-chloro-2,2,4-trimethyl-pentane) was used for the previously described polymerization. Again, the main characteristics can be found in table 1.

Table 1 - Characteristics of the applied nanoparticles, particle radius means weight average in both cases and was determined by transmission electron microscopy (* - Degussa Aerosil, ** - Sigma-Aldrich nanopowder)

| | Core | | | PIB | | Particle |
|---|---|---|---|---|---|---|
| | silica | radius | BET | Mn | bonded | radius |
| | type | nm | m²/g | kg/mol | yes/no | nm |
| Ex a | OX50* | 20 | 50 | 15 | yes | 22,5 |
| Ex b | SA15** | 7,5 | 200 | 7 | yes | 11 |
| Ex c | SA15** | 7,5 | 200 | 15 | yes | 14 |
| Ex d | AE200* | 6 | 200 | 15 | yes | 12,5 |
| | | | | | | |
| CE e | OX50* | 20 | 50 | 12 | no | 20 |
| CE f | SA15** | 7,5 | 200 | 12 | no | 7,5 |
| CE g | SA15** | 7,5 | 200 | - | - | 7,5 |

Preparation of impact modified Polymer compositions (examples 1 - 10)

Two different polyolefin materials were used as base polymers:

- HC001 is a crystalline polypropylene homopolymer commercially available from Borealis Polyolefine GmbH, Austria. The polymer has an MFR (230°C/2,16 kg) of 2 g/10min, a density of 905 kg/m³ and an XS content of 0,5 wt%.

- Borsoft SD233CF is a crystalline heterophasic propylene-ethylene copolymer commercially available from Borealis Polyolefine GmbH, Austria. The polymer has an MFR (230°C/2,16 kg) of 2 g/10min, a density of 905 kg/m³ and an XS content of 28 wt%.

The core-shell nanoparticles (examples a, b and c) were dissolved in small amounts of dichloromethane (10ml solvent per gram of core-shell-nanoparticles), added to the crude polymer pellets and dried under vacuum at 50°C for about 3 hours. The melt mixing process was done on a HAAKE PolyDrive 600/610 two-blade kneader (V=69cm³ with 70% fill level) at 200°C and 50 rotations/minute; the mixing time was 5 minutes in all cases. For stabilization 0.1% Irganox B225 (available from Ciba Speciality Chemicals) and 0.1% calcium stearate were added to each sample prior to the melt mixing process.

The resulting impact modified polymer compositions were investigated in DSC, TGA, melt rheology, DMTA and tensile test as described above; all characterization results are summarized in table 2.

Preparation of comparative polymer compositions

(comparative examples 11 - 15)

The same base polymers and an identical dispersion process as for the inventive compositions were applied. Comparative examples 11 and 12 correspond to the base polymers HC001 and SD233CF. Non-modified silica nanoparticles (comparative examples e, f & g) were applied for all the other comparative examples, being combined with pure PIB in case of comparative examples 13 and 14.

The resulting comparative polymer compositions were investigated in DSC, TGA, melt rheology, DMTA and tensile test as described above; again, all characterization results are summarized in table 2.

| | | Base | Nanoparticle | | PIB* | DSC | | | | TGA | Rheology |
|---|---|---|---|---|---|---|---|---|---|---|---|
| | | polymer | type | amount | amount | Tm | Hm | Tc | Hc | residue | $\eta_0$ 230°C |
| | | type | - | wt% | wt% | °C | J/g | °C | J/g | wt% | Pa.s |
| | Ex 1 | HC001 | a | 2 | 0 | 162,9 | 101,7 | 115,1 | 90,9 | 1,05 | 5290 |
| | Ex 2 | HC001 | a | 3 | 0 | 162,1 | 105,4 | 114,2 | 94,9 | 1,03 | 6990 |
| | Ex 3 | HC001 | a | 5 | 0 | 161,7 | 103,9 | 114,7 | 98,1 | 2,22 | 6920 |
| | Ex 4 | HC001 | b | 1 | 0 | 162,8 | 97,8 | 116,2 | 94,0 | 0,65 | 5100 |
| | Ex 5 | HC001 | b | 2 | 0 | 164,9 | 95,3 | 112,4 | 88,9 | 1,02 | 7890 |
| | Ex 6 | HC001 | b | 5 | 0 | 164,1 | 95,9 | 113,8 | 92,6 | 2,12 | 7120 |
| | Ex 7 | HC001 | c | 2 | 0 | 163,5 | 98,0 | 114,6 | 88,6 | 0,88 | 6440 |
| | Ex 8 | HC001 | c | 5 | 0 | 164,0 | 101,5 | 116,3 | 95,8 | 1,75 | 6630 |
| | Ex 9 | HC001 | c | 10 | 0 | 164,8 | 96,0 | 114,8 | 90,0 | 3,68 | 6300 |
| | Ex 10 | SD233CF | d | 3 | 0 | 143,1** | 65,1 | 101,3 | 54,3 | 1,05 | 2260 |
| | | | | | | | | | | | |
| | CE 11 | HC001 | - | 0 | 0 | 164,1 | 103,4 | 112,1 | 96,6 | 0,45 | 6650 |
| | CE 12 | SD233CF | - | 0 | 0 | 145,3** | 41,6 | 101,1 | 63,8 | 0,66 | 3290 |
| | CE 13 | HC001 | e | 3 | 3 | 162,7 | 102,9 | 114,3 | 92,1 | 2,83 | 7010 |
| | CE 14 | HC001 | f | 3 | 3 | 163,6 | 97,0 | 114,6 | 91,2 | 2,81 | 5780 |
| | CE 15 | HC001 | g | 5 | 0 | 162,6 | 100,1 | 114,9 | 90,7 | 4,99 | 6800 |
| | | | | | | | | | | | |
| | | DMTA | | | | | | Tensile test | | | |
| | | Tg(PIB) | Tg(EPR) | Tg(PP) | G'(+23°C) | A(Tg,PIB) | Modulus | Ext.B | Str.B | | |
| | | °C | °C | °C | MPa | - | MPa | % | MPa | | |
| | Ex 1 | -68 | - | 0 | 773 | 0,065 | 1427 | 4,1 | 22,3 | | |
| | Ex 2 | -68 | - | 0 | 796 | 0,068 | 1434 | 6,7 | 27,0 | | |
| | Ex 3 | -70 | - | 2 | 796 | 0,075 | 1427 | 9,2 | 24,1 | | |
| | Ex 4 | -70 | - | 0 | 751 | 0,101 | 1430 | 7,4 | 28,2 | | |
| | Ex 5 | -70 | - | 0 | 759 | 0,124 | 1415 | 9,1 | 24,2 | | |
| | Ex 6 | -68 | - | 0 | 778 | 0,189 | 1430 | 17,3 | 18,8 | | |
| | Ex 7 | -70 | - | 2 | 759 | 0,088 | 1434 | 13,2 | 19,5 | | |
| | Ex 8 | -68 | - | 0 | 794 | 0,109 | 1438 | 9,9 | 22,7 | | |
| | Ex 9 | -70 | - | 0 | 765 | 0,134 | 1481 | 11,2 | 20,7 | | |
| | Ex 10 | -75 | -53 | -6 | 279 | - | - | - | - | | |
| | | | | | | | | | | | |
| | CE 11 | - | - | 2 | 831 | 0,000 | 1496 | 3,8 | 28,0 | | |
| | CE 12 | - | -52 | -6 | 278 | - | - | - | - | | |
| | CE 13 | -65 | - | 2 | 790 | 0,010 | 1474 | 7,9 | 25,0 | | |
| | CE 14 | -63 | - | 1 | 784 | 0,046 | 1460 | 9,8 | 24,1 | | |
| | CE 15 | - | - | 2 | 848 | 0,000 | 1544 | 5,3 | 29,8 | | |

Table 2 – Characteristics of the polymer compositions

(* - pure PIB, $M_n$ = 12 kg/mol; ** secondary melting point at 117°C (PE))

The results in table 2 show clearly several advantages of the inventive impact modified polymer compositions (examples 1-10) over the comparative polymer compositions (comparative examples 12-16):

- The processability is retained by keeping the zero shear viscosity in the same range as the base polymer or even reducing it.
- A low temperature glass transition at a temperature below the normal range for ethylene-propylene rubber (-40 to -55°C) is added to the system, which is indicative for an improved low temperature impact strength.
  Further, the additional low temperature glass transition, which is attributable to PIB, is located at lower temperatures for the inventive examples than for the comparative examples, which is again indicative for an improved low temperature impact strength.
  Still further, the peak area from DMTA measurement, which is associated with the PIB glass transition temperature is significantly higher for the inventive examples than for the comparative examples, which is again indicative for an improved low temperature impact strength.
- The stiffness of the compositions, expressed by the storage modulus G' at +23°C as well as by the tensile modulus, remains in the same range as for the base polymer.

- The elongation at break as determined in the tensile test is significantly increased, compared to the respective base resin, relating to an enhanced mechanical strength at room temperature.

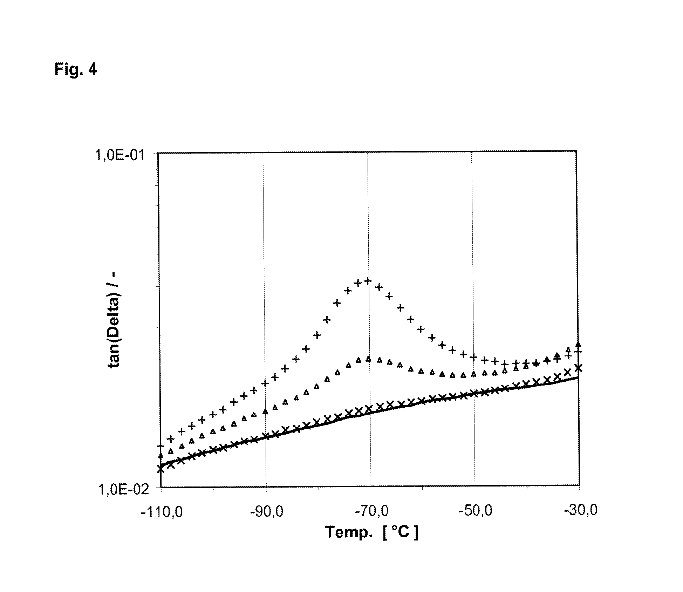

Figure 4 shows glass transition temperatures of PIB/nanoparticle phase from DMTA measurements (full line - comparative example 11, X - comparative example 13, Δ - example 4, + - example 6)

The procedure for the integration of the tan(Delta)-peak and its correlation to impact strength is described in:

C. Grein, K. Bernreitner & M. Gahleitner, Potential and Limits of Dynamic Mechanical Analysis as a Tool for Fracture Resistance Evaluation of Isotactic Polypropylenes and Their Polyolefin Blends, J.Appl.Polym.Sci. 93 (2004) 1854-67

## Claims

1. A process for improving the impact resistance of a polyolefin (A) by adding 0,1 to 15 wt% of nanoparticles (B) comprising (i) a mineral core having a weight average diameter of 1 to 100 nm and (ii) a polymeric shell which is coupled chemically to the core.

2. Process according to claim 1, wherein the polyolefin (A) is a crystalline polyolefin.

3. Process according to claim 1 or 2 wherein the polyolefin (A) comprises a polypropylene and/or polyethylene.

4. Process according to any of the claims 1 to 3 wherein the polyolefin (A) comprises a propylene homo- or copolymer having an MFR at 230°C and 2,16 kg load of 0,1 to 100 g/10min.

5. Process according to any of the claims 1 to 4 wherein the polyolefin (A) comprises an ethylene homo- or copolymer having a density from 890 to 950 kg/m$^3$ and an MFR at 190°C and 2,16 kg load of 0,05 to 50 g/10min.

6. Process according to any of the claims 1 to 5 wherein the core (i) of the nanoparticles (B) comprises an oxide, silicate or carbonate of a metal or semi-metal of group 2-13 of the periodic table.

7. Process according to any of the claims 1 to 6 wherein the core (i) of the nanoparticles (B) comprises silicon dioxide, titanium dioxide, zirconium dioxide, zinc oxide or aluminium oxide.

8. Process according to any of the claims 1 to 7 wherein the polymeric shell (ii) comprises a non-polar polymer having a molecular weight of 1 to 1000 kg/mol.

9. Process according to any of the claims 1 to 8 wherein the polymeric shell (ii) comprises polyisobutylene, polybutadiene or polystyrene.

10. Process according to any of the claims 1 to 9 wherein the polymeric shell (ii) comprises a polyisobutylene homo- or copolymer.

11. Process according to any of the claims 1 to 10 wherein 0,5 to 10 wt% of nanoparticles (B) are added to the polyolefin (A).

12. Process according to any of the claims 1 to 11 wherein the addition of the nanoparticles (B) to the polyolefin (A) is carried out in a melt mixing operation at a temperature from 150 to 350°C.

13. An impact modified polymer composition comprising a polyolefin (A) and 0,1 to 15 wt% nanoparticles (B) comprising (i) a mineral core having a weight average diameter of 1 to 100 nm and (ii) a polymeric shell which is coupled chemically to the core.

14. An impact modified polymer composition according to claim 13 wherein the polyolefin (A) is a crystalline polyolefin.

15. An impact modified polymer composition according to claims 13 or 14 wherein the polyolefin (A) comprises a propylene homo- or copolymer having an MFR at 230°C and 2,16 kg load of 0,1 to 100 g/10min.

16. An impact modified polymer composition according to any of the claims 13 to 15 wherein the polyolefin (A) comprises an ethylene homo- or copolymer having a density from 890 to 950 kg/m$^3$ and an MFR at 190°C and 2,16 kg load of 0,05 to 50 g/10min.

17. An impact modified polymer composition according to any of the claims 13 to 16 wherein the core (i) of the nanoparticles (B) comprises an oxide, silicate or carbonate of a metal or semi-metal of group 2-13 of the periodic table.

18. An impact modified polymer composition according to any of the claims 13 to 17 wherein the core (i) of the nanoparticles (B) comprises silicon dioxide, titanium dioxide, zirconium dioxide, zinc oxide or aluminium oxide.

19. An impact modified polymer composition according to any of the claims 13 to 18 wherein the core (i) of the nanoparticles (B) has a weight average diameter of 5 to 50 nm.

20. An impact modified polymer composition according to any of the claims 13 to 19 wherein the polymeric shell (ii) comprises a non-polar polymer having a molecular weight of 1 to 1000 kg/mol.

21. An impact modified polymer composition according to any of the claims 13 to 20 wherein the polymeric shell (ii) comprises polyisobutylene, polybutadiene or polystyrene.

22. An impact modified polymer composition according to any of the claims 13 to 21 wherein the polymeric shell (ii) comprises a polyisobutylene homo- or copolymer.

23. An impact modified polymer composition according to any of the claims 13 to 22 comprising 0,5 to 10 wt% of the nanoparticles (B).

24. An impact modified polymer composition according to any of the claims 13 to 23 having a zero shear viscosity at 230°C from 100 to 500.000 Pa.s.

25. Use of an impact modified polymer composition according to any of the claims 13 to 24 for the preparation of extruded, injection molded or blow molded articles.

**Fig. 1**

**Fig. 2**

**Fig. 3**

**Fig. 4**

**European Patent Office**

**EUROPEAN SEARCH REPORT**

Application Number

EP 07 11 3637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 480 005 A (BROWNSCOMBE THOMAS F [US]) 30 October 1984 (1984-10-30) <br> * column 4, line 37 * <br> * column 8, lines 17,18 * <br> * column 7, lines 49,50 * <br> ----- | 1-25 | INV. <br> C08K9/08 |
| A | US 5 910 523 A (HUDSON STEVEN DAVID [US]) 8 June 1999 (1999-06-08) <br> * claim 1 * <br> ----- | 1-25 | |

TECHNICAL FIELDS SEARCHED (IPC)

C08K

The present search report has been drawn up for all claims

| Place of search | Date of completion of the search | Examiner |
|---|---|---|
| The Hague | 31 March 2008 | Siemens, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 11 3637

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2008

| Patent document cited in search report | | Publication date | Patent family member(s) | Publication date |
|---|---|---|---|---|
| US 4480005 | A | 30-10-1984 | NONE | |
| US 5910523 | A | 08-06-1999 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1746128 A
- US 5028482 A
- US 6720007 B
- US 5234879 A
- WO 9219653 A
- WO 9219658 A
- WO 9933843 A
- EP 1354901 A1
- EP 1344793 A1
- EP 1702956 A2
- EP 1655339 A1

**Non-patent literature cited in the description**

- **KOTEK et al.** *Eur. Polym. J.,* 2004, vol. 40, 679-684
- **C. GREIN et al.** *J.Appl.Polym.Sci.,* 2003, vol. 87, 1702-12
- **S.-M. LAI et al.** *Europ. Polym. J.,* 2005, vol. 41, 3031-3041
- **KOLARIK et al.** *Polymer Communications,* 1990, vol. 31, 201-4
- **KOLARIK et al.** *Polymer,* 1992, vol. 33, 4961-7
- **KAEMPFER et al.** *Polymer,* 2002, vol. 43, 2909-16
- **RONG et al.** *Polymer,* 2001, vol. 42, 167-83
- Polymer Handbook. Wiley, 1989
- Macromolecular Physics. **B. WUNDERLICH.** Crystal Structure, Morphology, Defects. Academic Press, 1973, vol. 1
- Encyclopedia of Polymer Science and Technology. John Wiley & Sons, Inc, 2002, 382-482
- **MIJATOVIC et al.** *Mikrochim. Acta,* 2000, vol. 133, 175-181
- **PÖLT et al.** *J.Appl.Polym.Sci.,* 2000, vol. 78, 1152-61
- **COX ; MERZ.** *J.Polym.Sci.,* 1958, vol. 28, 619
- **C. GREIN ; K. BERNREITNER ; M. GAHLEITNER.** Potential and Limits of Dynamic Mechanical Analysis as a Tool for Fracture Resistance Evaluation of Isotactic Polypropylenes and Their Polyolefin Blends. *J.Appl.Polym.Sci.,* 2004, vol. 93, 1854-67